# EUROPEAN PATENT APPLICATION

(11) **EP 4 679 596 A1**
(43) Date of publication of application: **14.01.2026**
(21) Application number: 24187495.7
(22) Date of filing: 09.07.2024
(51) Int. Cl.: H01M 50/242, H01M 50/209, H01M 50/249, H01M 50/271, B60K 1/04, B60L 50/64, B60L 50/60, B62D 25/20

(54) **BATTERY ASSEMBLY FOR A VEHICLE, UNDERFLOOR STRUCTURE FOR A VEHICLE, VEHICLE, AND METHOD**

(71) Applicant: Volvo Car Corporation, 405 31 Göteborg (SE)
(72) Inventor: PERSSON, Klas, 40531 Göteborg (SE); KARLSSON, Daniel, 40531 Göteborg (SE)
(74) Representative: Maiwald GmbH

(57) **Abstract**

The disclosure relates to a battery assembly (18) for a vehicle. The battery assembly (18) comprises a receptacle (20), a cover plate (36), and at least one structural member (42). A plurality of battery cells (34) is arrangeable in the receptacle (20). The cover plate (36) closes the receptacle (20) such that the plurality of battery cells (34) is enclosable by the receptacle (20) and the cover plate (36). The at least one structural member (42) is arranged adjacent to the receptacle (20) on an outside of the receptacle (20). Additionally, an underfloor structure (12) for a vehicle is described. Furthermore, a vehicle comprising a battery assembly (18) and/or an underfloor structure (12) is shown. Moreover, a method for manufacturing an underfloor structure (12) for a vehicle is presented.

## Description

### TECHNICAL FIELD

The present disclosure relates to a battery assembly for a vehicle.

Moreover, the present disclosure is directed to an underfloor structure for a vehicle.

Additionally, the present disclosure relates to a vehicle.

Furthermore, the present disclosure is directed to a method for manufacturing an underfloor structure for a vehicle.

### BACKGROUND ART

In battery electric vehicles, a battery assembly may be configured as a so-called structural battery assembly. This means that the battery assembly not only is configured to provide electric energy, but also to support mechanical loads occurring during the use of the vehicle. Thus, such battery assemblies need to be designed such that they can provide mechanical stability to the vehicle in which they are used. Altogether, a structural battery needs to be integrated into an associated vehicle both from an electric perspective and from a mechanical perspective.

### SUMMARY

It is therefore an objective of the present disclosure to improve know battery assemblies, in particular known structural battery assemblies. Such battery assemblies shall be simplified from a production perspective.

The problem is at least partially solved or alleviated by the subject matter of the independent claims of the present disclosure, wherein further examples are incorporated in the dependent claims.

According to a first aspect, there is provided a battery assembly for a vehicle. The battery assembly comprises:
SE:TOP
- a receptacle, wherein a plurality of battery cells is arrangeable in the receptacle,
- a cover plate closing the receptacle such that the plurality of battery cells is enclosable by the receptacle and the cover plate, and
- at least one structural member arranged adjacent to the receptacle.

In this context, the receptacle may form a cavity which is open on one side. Such a cavity may also be designated as a recess. A receptacle having such a form may be called cup-shaped. The plurality of battery cells is arrangeable in the cavity or recess. This means that a reception space is provided in the cavity or recess in which a plurality of battery cells may be arranged. The at least one structural member may be capable of absorbing high forces occurring during the use of the battery assembly in a vehicle, e.g. in case of a crash. In an example, the high forces are lateral forces when considering a vehicle equipped with the battery assembly. In case of a crash, these forces applied to the at least one structural member may be at least partially transferred to the receptacle. Due to these forces, the structural member and/or the receptacle may be deformed, thereby absorbing the forces at least partially. The structural member may be arranged on an outside of the receptacle. The combination of the structural member and the receptacle lead to a comparatively high load absorption capability. No further components than the receptacle and the cover plate are needed to enclose the reception space for the plurality of battery cells. This is structurally very simple. Moreover, this is very simple from a production point of view since only comparatively few components need to be assembled.

According to an example, a plurality of battery cells is arranged in the receptacle and the plurality of battery cells is enclosed by the receptacle and the cover plate.

According to an example, the structural member is a beam member. This means that the structural member has an elongated form.

In an example, the receptacle comprises a metal material. In another example, the metal material is steel and/or aluminum. In these cases, the receptacle is particularly suitable for receiving the battery cells and for supporting a mechanical load.

In another example, the at least one structural member comprises a metal material. In another example, the metal material is steel and/or aluminum. In these cases, the structural member is particularly suitable for supporting a mechanical load.

In the context of the present disclosure, the battery assembly may be a traction battery assembly. This means that the energy provided by the battery assembly is used for driving an associated vehicle.

The plurality of battery cells may be cylindrical battery cells. In another example, the plurality of battery cells may be prismatic battery cells.

According to an example, the receptacle is integrally formed. In other words, the receptacle is formed as a unitary part. Being formed as a unitary part may be understood as being formed as a single part. This means that the number of individual parts that may need to be mechanically connected to form the receptacle can be reduced. This renders the receptacle very simple both from a structural point of view and from a production point of view. Moreover, an integrally formed receptacle may be easily rendered tight against liquids, e.g. water. This applies in two directions. Thus, liquids from the exterior of the battery assembly may be reliably hindered from entering the interior of the battery assembly. In the same manner, liquid components of the battery assembly may be reliably kept in the interior of the battery assembly.

According to an example, the receptacle comprises a flat bottom portion and a plurality of lateral walls extending from the bottom portion. At least one of the plurality of lateral walls is inclined with respect to a direction oriented perpendicular to the bottom portion. Inclined means that the at least one of the plurality of lateral walls is neither perpendicular nor parallel to the direction oriented perpendicular to the bottom portion. In other words, the angle between the at least one inclined lateral wall and the direction oriented perpendicular to the bottom portion may be larger than 0 degrees but less than 90 degrees or greater than 90 degrees but less than 180 degrees. According to an example, two of the lateral walls are inclined. These two lateral walls may be arranged at opposite ends of the receptacle. According to another example, three lateral walls are inclined. According to still another example, all lateral walls are inclined. Having inclined walls facilitates the production of the battery assembly. This is due to the fact that manufacturing the receptacle is easier. Moreover, arranging the reception space for the plurality of battery cells into the receptacle is facilitated by one or more inclined walls. Furthermore, an inclined wall may fully or partially deflect a force acting on the receptacle. This allows to protect the plurality of battery cells from effects of a force acting on the battery assembly, if the plurality of battery cells are arranged in the reception space. This means that the load absorption capability of the battery assembly is further improved.

According to an example, the structural member is arranged adjacent to the at least one lateral wall which is inclined. A side of the structural member located opposite the inclined wall at least partially extends in parallel to the inclined wall. This means that the side of the structural member located opposite the inclined wall is also inclined. This side of the structural member may as well contact the inclined wall of the receptacle. This increases a contact surface between the structural member and the receptacle. This has the effect that in case of the crash situation, the at least partially transferred forces are equally distributed over an increased contact surface. Moreover, as has already been explained before, an inclined wall or side has the capability to deflect a force acting thereon. Thus, a configuration in which the side of the structural member and the lateral wall of the receptacle are inclined, offers the possibility to absorb a force by a relative movement, e.g. relative sliding, of the structural member and the receptacle with respect to one another. Altogether, this means that the load absorption capability of the vehicle is further improved.

According to an example, the receptacle comprises a deformation zone, wherein a reception space for the plurality of battery cells is located outside the deformation zone. The deformation zone may be located in an interior of the receptacle. The deformation zone may be seen as a mechanical buffer zone. Further, the deformation zone may be understood as a zone that may be deformed in case of the crash situation. Since the reception space for the plurality of battery cells is arranged outside the deformation zone, the plurality of battery cells in the receptacle may not be damaged. This means that the risk of damaging the battery cells in the receptacle is low.

According to an example, the deformation zone is arranged between the at least one structural member and the reception space for the plurality of battery cells. Thus, in case of the crash situation, the at least partially transferred forces applied to the battery assembly may be transferred from the at least one structural member to the deformation zone before they are transferred to the rest of the receptacle. In such a case, the structural member and/or the deformation zone may be deformed. In other words, the deformation zone may serve as a safety zone that absorbs the at least partially transferred forces before the forces may damage the plurality of battery cells in the receptacle. This means that the load absorption capability of the vehicle is further improved.

According to an example, the deformation zone is filled with at least one filler material. The filler material may be configured to enhance load absorption capabilities of the battery assembly. Additionally or alternatively, the filler material may be configured to enhance safety of the plurality of battery cells.

The filler material may comprise at least one liquid, solid, gel, and/or gas.
The gas may be ambient air. This has the advantage that it is very light. Alternatively, the at least one filler material may be a foam, a wax, a glue, a polymer, or materials alike. Such filler materials may enhance the load absorption capabilities of the battery assembly. In another example, at least two filler materials are arranged in the space to form individual material layers in the space. In another example, the at least one filler material is an endothermic material. Yet, in another example, the at least one filler material is an expanding glue. Depending on the material used as filler material, the desired structural properties of the deformation zone may be predetermined. This means that the at least one filler material may further improve the structural integrity of the receptacle. This has the effect that the load absorption capability of the vehicle is further improved while keeping the safety of the plurality of battery cells high.

According to an example, the receptacle comprises two deformation zones. The reception space for the plurality of battery cells is located between the two deformation zones. As has been mentioned before, the deformation zone may be seen as a mechanical buffer zone and further be understood as a zone that may be deformed in case of the crash situation such that the plurality of battery cells arranged in the receptacle may not be damaged. Both deformation zones may be located in an interior of the receptacle. The battery cells may be further protected from the at least partially transferred forces applied to the battery assembly if the plurality of battery cells is located between the two deformation zones. This has the effect that the risk of damaging the battery cells in the receptacle may be further reduced. This configuration provides particular protection against forces originating from two opposite sides.

According to an example, the battery assembly further comprises at least two structural members, wherein the at least two structural members are arranged on opposite sides of the receptacle. This has the effect that the structural integrity of the battery assembly may be further improved. Thus, the load absorption capability of the vehicle is further improved. This configuration provides particular protection against forces originating from two opposite sides.

In an example, the at least two structural members both are beam members, i.e. both structural members have an elongated shape.

According to an example, the receptacle comprises a connection interface configured for arranging the receptacle at a structural element of a vehicle body. The structural member and the receptacle are connected via the connection interface. The connection interface may be configured for mechanically connecting the receptacle to the structural element of the vehicle body. In other words, a single connection interface on the receptacle is configured for mechanically connecting both the structural element of the vehicle body and the structural member to the receptacle. In this context, a mechanical connection may be realized using one or more threaded bolts, one or more rivets, one or more weld seams, one or more adhesive seams and/or any other suitable mechanical connection means. It is noted that the aforementioned alternatives may be combined. Thus, no further connection members or connection interfaces are needed to mechanically connect both the structural element of the vehicle body and the structural member to the receptacle. This reduces the complexity of the mechanical connection between the structural element of the vehicle body, the structural member and the receptacle.

According to an example, the connection interface comprises at least one through hole configured to receive at least one fixation element. The fixation element may be a bolt, a screw, and/or an element alike. This means that both the structural element of the vehicle body and the structural member may be mechanically connected to the receptacle using the at least one fixation element. Thus, connecting the structural element of the vehicle body and the structural member to the receptacle is comparatively easy.

According to a second aspect, there is provided an underfloor structure for a vehicle. The underfloor structure comprises:
- a battery assembly according to the first aspect, and
- a structural element of a vehicle body,
The battery assembly is mechanically connected to the structural element of the vehicle body.

The structural element may be understood as an element that is capable and/or configured to withstand forces or loads in case of a crash situation. Due to the connection between the structural element and the battery assembly, also the battery assembly is configured to bear such loads. In other words, the battery assembly is used as a structural component. Thus, the battery assembly may be called a structural battery assembly. Thus, the load absorption capability of the underfloor structure is improved. Moreover, as has been mentioned before, since the battery assembly is simple from a structural point of view and from a production point of view, this also applies to the underfloor structure.

In an example, the structural element is a sill member of the vehicle body.

According to an example, the at least one structural member of the battery assembly extends in a substantially longitudinal direction. In this context, longitudinal means that the at least one structural member extends in a forward and/or rearward driving direction of a vehicle to which the underfloor structure is associated. This means that in case of a typical side crash situation, resulting forces or loads may be reliably absorbed by the at least one structural member. Thus, the underfloor structure offers a high level of safety.

According to a third aspect, there is provided a vehicle. The vehicle comprises a battery assembly according to the first aspect. Additionally or alternatively, the vehicle comprises an underfloor structure according to the second aspect. As has been mentioned before, using such a battery assembly and/or such an underfloor structure has the effect that the load absorption capability of the vehicle may be improved, e.g. during a crash. At the same time, a risk of damaging the battery cells in the receptacle is reduced.

According to a fourth aspect, there is provided a method for manufacturing an underfloor structure for a vehicle. The method comprises:
- providing a battery assembly according to the first aspect,
- providing a structural element of a vehicle body,
- mechanically connecting the receptacle of the battery assembly to the structural element, thereby mechanically connecting the structural member of the battery assembly to the receptacle of the battery assembly.

Thus, the connection between the receptacle and the structural element is established at the same time at which the connection between the structural member and the receptacle is established. This leads to quick and efficient manufacturing of the underfloor structure.

In another example, the method further comprises forming the receptacle via a hot forming process or a cold forming process. In this context, the receptacle may be formed from a single piece, e.g. a sheet metal piece.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising an underfloor structure according to the present disclosure, wherein the underfloor structure comprises a battery assembly according to the present disclosure,
- Figure 2: shows a partial sectional view along plane II-II of the vehicle of Figure 1,
- Figure 3: shows the battery assembly of Figure 2 in a separate view, and
- Figure 4: illustrates steps of the method according to the present disclosure for manufacturing an underfloor structure for a vehicle.

### DETAILED DESCRIPTION

The Figures are merely schematic representations and serve only to illustrate examples of the disclosure. Identical or equivalent elements are in principle provided with the same reference signs.

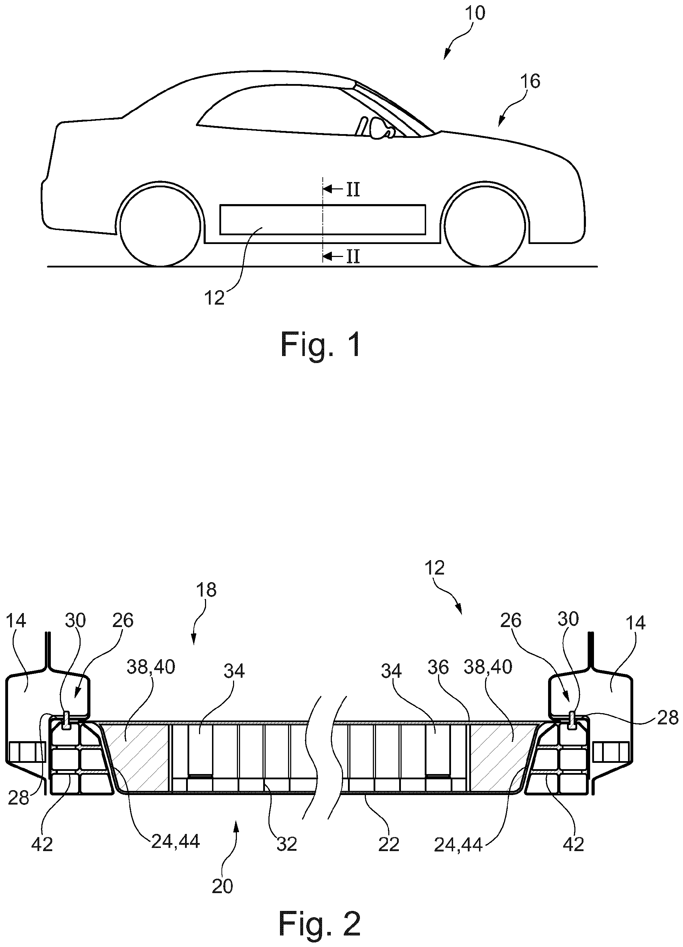

Figure 1 shows a vehicle 10 that comprises an underfloor structure 12.

The underfloor structure 12 is shown in more detail in Figure 2.

The underfloor structure 12 comprises a structural element 14 of a vehicle body 16. In the present example, the structural element 14 is formed by two sill members.

The underfloor structure 12 further comprises a battery assembly 18.

In the example of Figure 2, the battery assembly is arranged between the two sill members forming the structural element 14.

The battery assembly 18 comprises a receptacle 20.

In the present example, the receptacle 20 may be designated as cup-shaped.

The receptacle 20 comprises a flat bottom portion 22 and a plurality of lateral walls 24 extending from the bottom portion 22.

In the present example, two of the plurality of lateral walls 24 are inclined with respect to a direction A oriented perpendicular to the bottom portion 22. In more detail, the two of the plurality of lateral walls 24 are inclined by 10 degrees with respect to the direction A oriented perpendicular to the bottom portion 22.

The two inclined lateral walls 24 also assume lateral positions with respect to a standard forward driving direction of the vehicle 10.

The receptacle 20 further comprises a connection interface 26.

In the present example, the connection interface is formed as a collar portion of the receptacle 20. The collar portion substantially extends in a plane parallel to the flat bottom portion 22.

The connection interface 26 is configured for mechanically connecting the receptacle 20 to the structural element 14 of the vehicle body 16. Consequently, the battery assembly 18 is mechanically connected to the structural element 14.

In the present example, the connection interface 26 comprises a plurality of through holes 28, wherein two of these through holes 28 are visible in Figure 2

Each of the through holes 28 is configured to receive a fixation element 30, in the present example a bolt.

Therefore, the battery assembly 18, more precisely the receptacle 20, and the structural element 14 are connected via a plurality of fixation elements 30, in the present example bolts.

In the present example, each of the fixation elements 30 is a threaded bolt.

It is noted, that in the present example, the receptacle 20 is formed integrally, i.e. the receptacle 20 is formed as a unitary part.

The interior of the receptacle 20 comprises a mounting unit 32 and a plurality of battery cells 34.

In the present example, the battery cells 34 are so-called prismatic battery cells 34.

The plurality of battery cells 34 is mechanically connected to the mounting unit 32. In the present example, the mounting unit is made from a polymer material and is plate-shaped. Moreover, the mounting unit comprises a plurality of coolant channels through which a coolant may be guided for cooling the battery cells 34.

In the present example, the plurality of battery cells 34 is mechanically connected to the cover plate 36 via an adhesive. In the present example, the adhesive is a thermal paste.

The battery assembly 18 further comprises a cover plate 36. The cover plate 36 closes the receptacle 20 such that the plurality of battery cells 34 is enclosed by the receptacle 20 and the cover plate 36. Thus, using the receptacle 20 and the cover plate 36, the battery cells 34 are sealed from an environment.

The receptacle 20 further comprises two deformation zones 38. The plurality of battery cells 34 is located outside of each of the two deformation zones 38. Further, the plurality of battery cells 34 is located between the two deformation zones 38.

Each of the two deformation zones 38 is filled with one filler material 40. In the present example, the filler material 40 is a polymer foam.

In the present example, each of the deformation zones 38 has a width of approximately 100 mm, wherein, in the present example, the width of the deformation zones 38 is measured in a width direction of the vehicle 10, i.e. transversely to a standard forward driving direction of the vehicle 10. It is noted that in other examples, a width of a deformation zone generally is 50mm to 200mm, preferably 80mm to 150mm. Thus, in other examples, the width of the deformation zone, for example, can be 90 mm or 120mm.

In the present example, the battery assembly 18 further comprises two structural members 42.

In the present example, both structural members 42 are beam members.

Each of the two structural members 42 extends in a substantially longitudinal direction. In this context, longitudinal means that the two structural members 42 extend in parallel a standard forward driving direction of the vehicle 10.

The two structural members 42 are arranged on opposite sides of the receptacle 20.

In the present example, each of the structural members 42 has a width of approximately 100 mm, wherein, in the present example, the width of the structural members 42 is measured in a width direction of the vehicle 10, i.e. transversely to a standard forward driving direction of the vehicle 10. It is noted that in other examples, a width of a structural member generally is 50mm to 200mm, preferably 80mm to 150mm. Thus, in other examples, the width of the structural member, for example, can be 90 mm or 120mm.

Consequently, the two deformation zones 38 are arranged between the two structural members 42. Thus, also the battery cells 34 are arranged between the two structural members 42. In more detail, each of the at least two structural members 42 is arranged adjacent to the receptacle 20 on an outside of the receptacle 20. Further, each of the at least two structural members 42 is arranged adjacent to an inclined wall 44, respectively.

In this context, the two structural members 42 may abut against an associated side of the receptacle 20, i.e. the associated inclined wall 44, or may be arranged at a comparatively small distance from an associated side of the receptacle 20, i.e. the associated inclined wall 44.

A side of each of the at least two structural members 42 located opposite the inclined wall 44, at least partially extends in parallel to the inclined wall 44, i.e. is also inclined.

Each of the two structural members 42 and the receptacle 20 are mechanically connected via a plurality of the through holes 28 and an associated plurality of fixation elements 30.

Thus, also the structural members 42 are mechanically connected to the structural element 14, i.e. the sill members of the vehicle body.

Thus, in a case in which the vehicle 10 is in a situation in which another vehicle or object crashes into its left side, the structural member 42 arranged on the left side and the deformation zone 38 arranged on the left side may absorb a resulting load by a deformation of the structural member 42 and a deformation of the deformation zone 38, i.e. the receptacle 20 and the cover plate 36.

The same applies in a case in which the vehicle 10 is in a situation in which another vehicle or object crashes into its right side. In this case, the structural member 42 arranged on the right side and the deformation zone 38 arranged on the right side may absorb a resulting load by a deformation of the structural member 42 and a deformation of the deformation zone 38, i.e. the receptacle 20 and the cover plate 36.

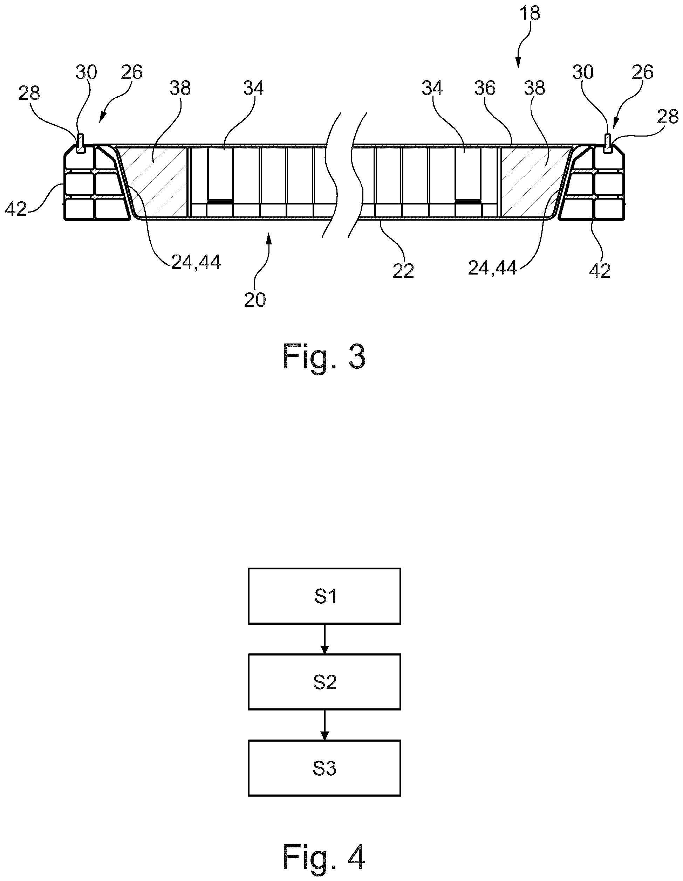

In the following, the method for manufacturing the underfloor structure 12 for the vehicle 10 will be explained in more detail (cf. Figure 4).

In a first step S 1 of the method for manufacturing the underfloor structure 12 for the vehicle 10, the battery assembly 18 is provided.

In a second step S2 of the method for manufacturing the underfloor structure 12 for the vehicle 10, the structural element 14 of the vehicle body 16 is provided. As has been mentioned before, the structural element 14 is formed by the sill members.

In a third step S3 of the method for manufacturing the underfloor structure 12 for the vehicle 10, the receptacle 20 of the battery assembly 18 is mechanically connected to the structural element 14. This is done by arranging the connection elements 30 in the associated through holes 28.

At the same time, the two structural members 42 of the battery assembly 18 are mechanically connected to the receptacle 20 of the battery assembly 18. This means that the structural members 42 are connected to the receptacle using the same connection elements 30 and the same through holes 28 that are used for connecting the receptacle 20 to the structural element 14.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: underfloor structure
- 14: structural element
- 16: vehicle body
- 18: battery assembly
- 20: receptacle
- 22: bottom portion
- 24: lateral walls
- 26: connection interface
- 28: through hole
- 30: fixation element
- 32: mounting unit
- 34: battery cell
- 36: cover plate
- 38: deformation zone
- 40: filler material
- 42: structural member
- 44: inclined wall

- A: direction oriented perpendicular to the bottom portion

- S 1: first step
- S2: second step
- S3: third step

## Claims

1. A battery assembly (18) for a vehicle (10), the battery assembly (18) comprising:
- a receptacle (20), wherein a plurality of battery cells (34) is arrangeable in the receptacle,
- a cover plate (36) closing the receptacle (20) such that the plurality of battery cells (34) is enclosable by the receptacle (20) and the cover plate (36), and
- at least one structural member (42) arranged adjacent to the receptacle (20).

2. The battery assembly (18) of claim 1, wherein the receptacle (20) is integrally formed.

3. The battery assembly (18) of claim 1 or 2, wherein the receptacle (20) comprises a flat bottom portion (22) and a plurality of lateral walls (24) extending from the bottom portion (22), wherein at least one of the plurality of lateral walls (24) is inclined with respect to a direction (A) oriented perpendicular to the bottom portion (22).

4. The battery assembly (18) of claim 3, wherein the structural member (42) is arranged adjacent to the at least one lateral wall (24, 44) which is inclined, and wherein a side of the structural member (42) located opposite the inclined wall (44) at least partially extends in parallel to the inclined wall (44).

5. The battery assembly (18) of any one of the preceding claims, wherein the of the receptacle (20) comprises a deformation zone (38), wherein the plurality of battery cells (34) is locatable outside the deformation zone (38).

6. The battery assembly (18) of claim 5, wherein the deformation zone (38) is arranged between the at least one structural member (42) and a reception space for the plurality of battery cells (34).

7. The battery assembly (18) of claim 5 or 6, wherein the deformation zone (38) is filled with at least one filler material (40).

8. The battery assembly (18) of any one of claims 5 to 7, wherein the interior of the receptacle (20) comprises two deformation zones (38), wherein the reception space for the plurality of battery cells (34) is located between the two deformation zones (38).

9. The battery assembly (18) of any one of the preceding claims, comprising at least two structural members (42), wherein the at least two structural members (42) are arranged on opposite sides of the receptacle (20).

10. The battery assembly (18) of any one of the preceding claims, wherein the receptacle (20) comprises a connection interface (26) configured for arranging the receptacle (20) at a structural element (14) of a vehicle body (16), and wherein the structural member (42) and the receptacle (20) are connected via the connection interface (26).

11. The battery assembly (18) of claim 10, wherein the connection interface (26) comprises at least one through hole (28) configured to receive at least one fixation element (30).

12. An underfloor structure (12) for a vehicle (10), the underfloor structure (12) comprising:
- a battery assembly (18) of any one of the preceding claims, and
- a structural element (14) of a vehicle body (16),
wherein the battery assembly (18) is mechanically connected to the structural element (14) of the vehicle body (16).

13. The underfloor structure (12) of claim 12, wherein the at least one structural member (42) of the battery assembly (18) extends in a substantially longitudinal direction.

14. A vehicle (10) comprising a battery assembly (18) according to any one of claims 1 to 11 and/or comprising an underfloor structure (12) according to claim 12 or 13.

15. A method for manufacturing an underfloor structure (12) for a vehicle (10), the method comprising:
- providing a battery assembly (18) of any one of claims 1 to 11,
- providing a structural element (14) of a vehicle body (16),
- mechanically connecting the receptacle (20) of the battery assembly (18) to the structural element (14), thereby mechanically connecting the structural member (42) of the battery assembly (18) to the receptacle (20) of the battery assembly (18).
